# EUROPÄISCHE PATENTSCHRIFT

(11) **EP 1 062 014 B1**
(45) Veröffentlichungstag und Bekanntmachung des Hinweises auf die Patenterteilung: **28.05.2003**
(21) Anmeldenummer: 99913251.7
(22) Anmeldetag: 11.03.1999
(51) Int. Cl.: B01D 12/00, C01B 33/158

(54) **VERFAHREN ZUR TROCKNUNG UND HERSTELLUNG VON MIKROPORÖSEN TEILCHEN**
METHOD FOR DRYING AND PRODUCING MICROPOROUS PARTICLES
PROCEDE DE SECHAGE ET DE PRODUCTION DE PARTICULES MICROPOREUSES

(30) Priorität: 11.03.1998 DE 19810565
(43) Veröffentlichungstag der Anmeldung: 27.12.2000
(73) Patentinhaber: BASF AKTIENGESELLSCHAFT, 67056 Ludwigshafen (DE)
(72) Erfinder: TEICH, Friedhelm, D-68535 Edingen-Neckarhausen (DE); SCHELLING, Heiner, D-67281 Kirchheim (DE); KÖSTER, Herbert, D-67069 Ludwigshafen (DE); KRATZER, Horst, D-67227 Frankenthal (DE); REICHERT, Wolfgang, D-67061 Ludwigshafen (DE); GALL, Martin, D-67112 Mutterstadt (DE); ZIEGLER, Bernd, D-70806 Kornwestheim (DE)
(74) Vertreter: Isenbruck, Günter, Dr.
(86) Internationale Anmeldenummer: EP9901592
(87) Internationale Veröffentlichungsnummer: WO99046023

(56) Entgegenhaltungen:
- EP-A- 0 331 852
- EP-A- 0 486 004
- WO-A-95/06617
- DD-A- 247 610
- DE-A- 3 532 957
- US-A- 2 868 280
- US-A- 5 032 555

## Beschreibung

Die vorliegende Erfindung betrifft ein Verfahren zur Trocknung von mikroporösen, Fluid enthaltenden Teilchen und ein Verfahren zur Herstellung von mikroporösen, räumlich vernetzten Teilchen, bei dem dieses Trocknungsverfahren eingesetzt wird.

Es ist bekannt, Hydrogele, z.B. Kieselsäure-Hydrogele, die durch Ausfällen von Gelen aus Wasserglas hergestellt werden können, unter überkritischen Bedingungen zu mikroporösen, räumlich vernetzten Siliciumdioxid-Teilchen zu trocknen. Bei der überkritischen Trocknung wird die Grenzflächenspannung des in den mikroporösen Teilchen enthaltenen Fluids vollständig oder weitgehend aufgehoben mit dem Ziel, ein Schrumpfen der mikroporösen Teilchen beim Trocknen weitgehend zu vermeiden, da beim Schrumpfen charakteristische Eigenschaften der mikroporösen Teilchen ganz oder teilweise verloren gehen. Ein solches, durch überkritische Trocknung erhaltenes Produkt wird bei Gelen Aerogel genannt. Anders als bei der herkömmlichen Trocknung ohne besondere Vorkehrung, bei der die Gele eine große Volumenkontraktion erleiden und Xerogele entstehen, findet somit bei der Trocknung in der Nähe des kritischen Punkts nur eine geringe (< 15 %) Volumenkontraktion statt.

Der Stand der Technik zur Herstellung von Aerogelen mittels überkritischer Trocknung wird ausführlich beschrieben in z.B. in Reviews in Chemical Engineering, Band 5, Nr. 1-4, S. 157-198 (1988), worin auch die Pionierarbeiten von Kistler beschrieben sind.

Aus der Literatur ist auch die kontinuierliche Herstellung von Aerogel-Pulvem bekannt, vgl. z.B. US-A-2,572,321. DE-C-1 030 312, US-A-2,868,280 und US-A-5,032,555. Dabei wird eine Suspension eines feinteiligen, Fluid enthaltenden Gels mit einer Pumpe auf überkritischen Druck bezüglich der Fluidphase des Gels gebracht. Um die überkritische Temperatur der Fluidphase des Gels zu erreichen, strömt die Suspension durch einen Wärmetauscher und wird anschließend über ein Druckhalteventil entspannt. Das Aerogel wird in Zyklonen und auf Filtern abgeschieden. Nachteilig bei dem Pulververfahren ist, daß die gesamte zur Suspendierung erforderliche Flüssigkeit auf eine überkritische Temperatur gebracht werden muß, was einen entsprechenden Energiebedarf zur Folge hat. Weitere Nachteile sind die Abrasion im Entspannungsventil und das Stauben des Produktes. Abgesehen davon muß man zur Herstellung des feinteiligen, Fluid enthaltenden Gels in einem möglicherweise anfallenden Wasch- oder Entsalzungsschritt sowie, falls ein Hydrogel vorliegt, bei einem Austausch des Wassers durch z.B. brennbares Fluid spezielle Filtergeräte, wie teure, gekapselte Bandfilter o.ä. einsetzen.

Neben der kontinuierlichen Herstellung von Aerogel-Pulvem ist auch die kontinuierliche Herstellung von Kieselgel bekannt, vgl. hierzu US-A-2,436,403, US-A-2,485,249, US-A-2,466,842 und US-A-2,956,957 sowie Ullmanns Encyklopädie der technischen Chemie, 4. neubearbeitete Auflage, Band 21, S. 460-461. Die Gele fallen dabei unter anderem auch in Perlform an.

WO-A-95 06 617 betrifft hydrophobe Kieselsäure-Aerogele, die erhalten werden dusch Umsetzung einer Wasserglaslösung mit einer Säure bei einem pH-Wert von 7,5 bis 11, weitgehende Entfernung von ionischen Bestandteilen durch Waschen mit Wasser oder verdünnten wäßrigen Lösungen anorganischer Basen unter Halten des pH-Wertes des Hydrogels im Bereich von 7,5 bis 11, Verdrängung der in dem Hydrogel enthaltenen wäßrigen Phase durch einen Alkohol und anschließende überkritische Trocknung des erhaltenen Alkogels.

Ein Verfahren zur Herstellung von Kieselsäure-Aerogel im Pilotmaßstab ist von White beschrieben in Industrial and Engineering Chemistry, Band 31 (1939), Nr. 7, S. 827-831, sowie in Trans. A. J. Chem. E. (1942), S. 435-447. Das Verfahren umfaßt folgende Schritte, die alle diskontinuierlich ausgeführt werden: Herstellung und Alterung von Kieselsäure-Hydrogel, Zerkleinerung des Hydrogels zu Granulat, Abtrennung von Salz aus dem gebildeten Gel, Austausch des Wassers im Gel durch Alkohol, Eintrag des abtropftrockenen Gels in einen Druckbehälter, Aufheizen des Druckbehälters, Absenken des Drucks auf Atmosphärendruck, Evakuieren des Druckbehälters und anschließende Entfernung des Aerogels. Nachteilig bei diesem Verfahren ist, daß alle Schritte diskontinuierlich durchgeführt werden und somit sehr zeit-, personal- und kostenintensiv sind. White erwähnt keine kontinuierlichen Verfahren zur Granulatherstellung und zur Entsalzung. Beim Wasser/Alkohol-Austausch bevorzugt White für die Flüssigphase eine mit "Überschichten/Tränken/-Drainage" zu beschreibende Prozedur, die eine intermittierende Beaufschlagung der Festkörperschüttung mit Flüssigkeit darstellt. Eine zeitlich gleichmäßige Durchströmung hält White für unwirtschaftlicher.

Nach US-A-3,672,833 sind die bekannten Verfahren zur Entsalzung von Gelen und zum Austausch von Wasser durch andere Lösungsmittel extrem langwierige und somit kostspielige Prozesse. Um dies zu umgehen, wird dort die Gel-Herstellung aus niederen Alkylorthosilikaten vorgeschlagen. Diese erfordern jedoch bei ihrer Herstellung viel Energie.

EP-B-0 331 852 offenbart ein kontinuierliches Verfahren zur Extraktion von Coffein aus grünen Kaffeebohnen, bei dem die grünen Kaffeebohnen als Wanderbett im Gegenstrom zu überkritischem Kohlendioxid geführt werden. In DE-A-35 32 957 wird ein Apparat beschrieben, in dem ein körniges Einsatzgut im Wanderbett einer Gegenstromextraktion mit einem Lösungsmittel im flüssigen oder überkritischen Zustand, z.B. mit überkritischem Kohlendioxid, unterworfen wird. Die einzige spezifisch genannte Extraktion ist die von Rapsöl aus Raps.

Die Aufgabe der vorliegenden Erfindung bestand darin, ein verbessertes, wirtschaftlicheres Verfahren zur Trocknung von mikroporösen, Fluid enthaltenden Teilchen sowie ein verbessertes, wirtschaftlicheres Verfahren zur Herstellung von mikroporösen, räumlich vernetzten Teilchen unter Einsatz des Trocknungsverfahrens bereitzustellen, wobei die oben genannten Nachteile des Standes der Technik vermieden werden.

Überraschenderweise wurde gefunden, daß sich diese Aufgabe lösen läßt, wenn man die zu trocknenden, Fluid enthaltenden Teilchen als Wanderbett im Gegenstrom zu einem Trocknungsfluid führt, das unter wenigstens nah-kritischen Bedingungen vorliegt.
Weiterhin wurde gefunden, daß eine im wesentlichen kontinuierliche Herstellung von mikroporösen, räumlich vernetzten Teilchen möglich ist, wenn neben dem Trocknungsverfahren auch ein gegebenenfalls anfallendes Waschen und/oder Entsalzen oder ein Fluidaustausch in den Poren der mikroporösen Teilchen, und ein Abtrennen sorbierter Gase oder Stoffe im Wanderbett im Gegenstrom durchgeführt werden.
Somit betrifft die Erfindung ein Verfahren zur Trocknung von mikroporösen, Fluid enthaltenden Teilchen, bei dem man die zu trocknenden, Fluid enthaltenden Teilchen als Wanderbett im Gegenstrom zu einem Trocknungsfluid führt, das mit dem in den zu trocknenden Teilchen enthaltenen Fluid wenigstens unter den bei der Trocknung vorliegenden Bedingungen mischbar ist, wobei bei nah- bis überkritischem Druck und Temperatur des Fluids die Grenzflächenspannung des Fluids im Vergleich zu der bei atmosphärischem Druck und Raumtemperatur vorliegenden Grenzflächenspannung des Fluids verringert wird, vorzugsweise auf einen Wert im Bereich 0 bis 1/10, insbesondere 0 bis 1/20, der bei atmosphärischem Druck und Raumtemperatur vorliegenden Grenzflächenspannung.

Der Bereich, in dem vorzugsweise nach der Erfindung gearbeitet wird, kann dadurch definiert werden, daß die mikroporösen Teilchen bei der Trocknung ihre Eigenschaften nicht verlieren; dies bedeutet, daß sich z.B. die scheinbare Dichte des Produkts nicht signifikant erhöht, daß die Wärmeleitfähigkeit des Produkts nicht signifikant ansteigt, daß vorzugsweise kein Schrumpf von über 15%, insbesondere kein Schrumpf von über 10%, auftritt. Diese Gegebenheit kann auch dadurch beschrieben werden, daß das Aerogel nicht zum Xerogel (bei Normaldruck getrocknetes Gel) werden darf.

Die oben angeführte Grenzflächenspannung wird bestimmt, wie es in "The Propenies of Gases and Liquids" von Reid, Brausnitz, Sherwood, McGraw Hill, 1977, S. 601 ff. beschrieben ist, wobei die Grenzflächenspannung bei der zu prüfenden Temperatur (und Druck) mit der bei Zimmertemperatur und atmosphärischem Druck unter im übrigen gleichen Bedingungen gemessen und verglichen wird.

In einer weiteren Ausgestaltung betrifft die Erfindung ein Verfahren zur Herstellung von mikroporösen, räumlich vernetzten Teilchen durch
(a) Herstellen von mikroporösen, Porenflüssigkeit oder Fluid enthaltenden Teilchen,
(b) gegebenenfalls Waschen und/oder Entsalzen der in Stufe (a) erhaltenen, Porenflüssigkeit enthaltenden Teilchen mittels eines Lösungsmittels und/oder Wasser,
(c) gegebenenfalls teilweises oder vollständiges Austauschen der Porenflüssigkeit oder des Wassers oder des Lösungsmittels in den Teilchen durch ein Fluid ausgewählt aus Alkanolen, Ethern Aldehyden, Ketonen, Estern, Aminen, Ammoniak, Schwefeldioxid, Stickstoffdioxid, Schwefelhexafluorid, Alkanen, Alkenen und Gemischen von zwei oder mehreren davon, und Kohlendioxid unter Erhalt von mikroporösen, Fluid enthaltenden Teilchen,
(d) Trocknen der mikroporösen, Fluid enthaltenden Teilchen und
(e) gegebenenfalls Abtrennen sorbierter Gase und/oder Stoff von den getrockneten Teilchen aus Stufe (d).

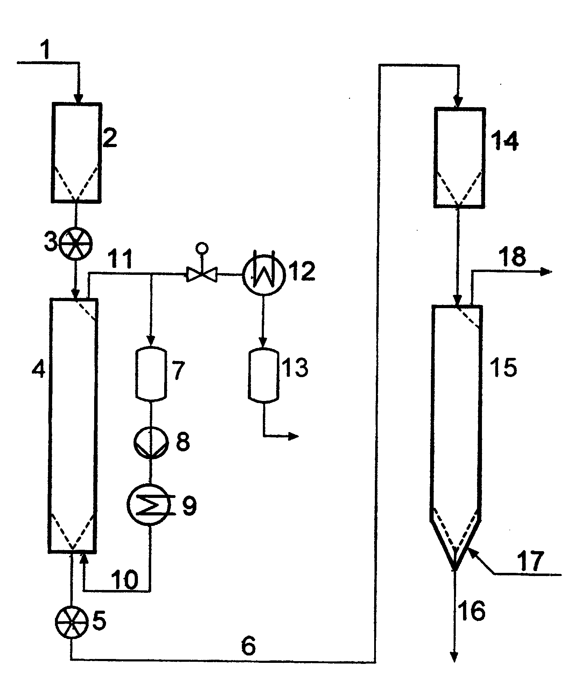

Das erfindungsgemäße Verfahren ist dann dadurch gekennzeichnet, daß die Stufen (b), (c), (d) und (e), sofern sie durchgeführt werden, im Wanderbett im Gegenstrom durchführt, indem man in Stufe (b) die aus Stufe (a) erhaltenen Teilchen einem Lösungsmittelstrom und/oder Wasserstrom entgegenführt, in Stufe (c) die Teilchen im Gegenstrom zu dem Fluid führt, in Stufe (d) die zu trocknenden, Fluid enthaltenden Teilchen im Gegenstrom zu einem Trocknungsfluid führt, das mit dem in den zu trocknenden Teilchen enthaltenen Fluid wenigstens unter den bei der Trocknung vorliegenden Bedingungen mischbar ist, wobei bei nah- bis überkritischem Druck und Temperatur des Fluids die Grenzflächenspannung des Fluids auf 0 bis 1/20 der bei atmosphärischen Druck und Raumtemperatur vorliegenden Grenzflächenspannung des Fluids verringert wird und in Stufe (e) die getrockneten Teilchen einem Inertgasstrom entgegenführt. Bevorzugte Ausführungsformen der Erfindung sind in der nachfolgenden Beschreibung, den Unteransprüchen, der Figur sowie dem Beispiel beschrieben.

Die einzige Figur der anliegenden Zeichnung zeigt schematisch eine Vorrichtung, die zur Durchführung einer Trocknung und Abtrennung sorbierter Gase oder Stoffe gemäß einer bevorzugten Ausführungsform der Erfindung geeignet ist.

Die mikroporösen, Fluid enthaltenden Teilchen, die zur erfindungsgemäßen Trocknung geeignet sind, unterliegen an sich keinen besonderen Beschränkungen. Es eignen sich alle Teilchen, Feststoffe, Strukturen oder Granulate, die wenigstens zum Teil, vorzugsweise ganz, mikroporös sind und in den Poren ein Fluid enthalten. Geeignete Teilchen sind z.B. Gele, die aus anorganischen oder organischen Materialien oder aus Polymermaterial bestehen, z.B. aus anorganischen Oxiden oder Hydroxiden wie Boroder Kieselsäure, Oxiden oder Hydroxiden der Metalle Titan, Molybdän, Wolfram, Eisen oder Zinn, Aluminiumoxid oder organischen Gelen wie Agar-Agar, Gelatine oder Albumin. Insbesondere eignet sich das erfindungsgemäße Verfahren zur Trocknung von Kieselsäure-Gelen. Es können Gele eingesetzt werden, die Verbindungen mit einer kritischen Temperatur kleiner als 350 °C oder Gemische oder Gemenge davon, vorzugsweise Wasser und/oder flüssige organische Verbindungen, als Fluid enthalten. Geeignet sind als Fluid u.a. alle Verbindungen, die später bei der Beschreibung der Trocknungsfluide genannt sind. Besonders geeignete Fluide sind Wasser, C₁-C₆-Alkanole oder Gemische davon, wobei Methanol, Ethanol, n- und Isopropanol bevorzugt sind. Am meisten bevorzugt ist Isopropanol. In Abhängigkeit von dem in den Poren vorliegenden Fluid spricht man z.B. von Hydrogelen und Alkogelen. Am häufigsten Anwendung findet das erfindungsgemäße Verfahren bei der Trocknung von Kieselsäure-Gelen, die Wasser, die vorstehend genannten flüssigen organischen Verbindungen oder Gemische davon als Fluid enthalten.

In einer bevorzugten Ausführungsform der Erfindung enthalten die mikroporösen, Fluid enthaltenden Teilchen 50 bis 97 Gew.-%, insbesondere 80 bis 90 Gew.-% Fluid bezogen auf das Gesamtgewicht der Teilchen bei Standardbedingungen (Druck von 1 bar, Temperatur von 25 °C). Die Teilchendurchmesser liegen im Bereich von 1 bis 15 mm, insbesondere 2 bis 6 mm. In den Teilchen liegen Makro-, Meso- und/oder Mikroporen vor. Die mikroporösen, zu trocknenden Teilchen können beliebige Formen besitzen, z.B. Perlen (Kugeln) oder eckige Formen. Das erfindungsgemäße Trocknungsverfahren eignet sich auch zur Trocknung von mikroporösen, Fluid enthaltenden Teilchen oder Strukturen, die eine gewisse regelmäßige Anordnung der Bausteine aufweisen können. In Betracht kommen als Teilchen beispielsweise auch in Anwesenheit von thermisch abbaubaren Templaten kristallisierte Strukturen, Nanostrukturen, deren regelmäßige Anordnung selbst organisiert ist, oder auch Nanokomposite sowie deren Vorstufen oder Clathrate. Daneben kann es sich bei den mikroporösen Teilchen auch um eine mit einer bestimmten Dotierung versehene mikroporöse Deckschicht auf einem nicht porösen Träger handeln. Es eignen sich auch Katalysatoren oder Verbindungen, die durch Imprägnierung oder Modifizierung chemisch reaktive Zentren erhalten haben oder bei der Trocknung imprägniert oder modifiziert werden. Bevorzugt entstehen nach Trocknung Aerogele. Enthalten die zu trocknenden Teilchen kein für die erfindungsgemäße Trocknung geeignetes Fluid, so kann dieses vor der Trocknung durch ein geeignetes Fluid oder ein besser geeignetes Fluid ausgetauscht weiden. So können erfindungsgemäß einige mikroporöse Teilchen mit Wasser als Fluid getrocknet werden. Möchte man jedoch die für Wasser als Trocknungsfluid hohen kritischen Temperaturen und Drücke umgehen, so kann entweder ein mit Wasser mischbares Trocknungsfluid (mischbar zumindest unter den Trocknungsbedingungen), z.B. ein Alkohol, verwendet weiden, oder man tauscht das im Hydrogel enthaltene Wasser gegen ein für die Trocknung besser geeignetes Fluid, z.B. einen Alkohol, ganz oder teilweise aus. Austausch und Trocknung können auch gleichzeitig durchgeführt werden.

Als Trocknungsfluide werden bevorzugt Stoffe verwendet, die bis zu ihrer kritischen Temperatur stabil sind. Sie können gegenüber den zu trocknenden Teilchen inert sein, können aber auch durch Reaktion mit der Oberfläche der Teilchen diese modifizieren und gegebenenfalls dadurch zusätzlich die Grenzflächenspannung herabsetzen. Zweckmäßigerweise verwendet man Trocknungsfluide, deren kritische Daten nicht zu hoch liegen, um einen größeren apparativen Aufwand zu vermeiden. Geeignete Trocknungsfluide sind Ammoniak, Schwefeldioxid, Stickstoffdioxid, Schwefelhexafluorid; Alkane wie Propan, Butan, Pentan, Hexan und Cyclohexan; Alkene wie C₁-C₇-n-, iso-, neo-, sekundäre oder tertiäre Alkene, z.B. Ethen oder Propen; Alkanole wie Methanol, Ethanol oder n- oder Isopropanol oder Butanole; Ether wie Dimethyl-, Diethylether oder Tetrahydrofuran; Aldehyde wie Formaldehyd oder Acetaldehyd; Ketone wie Aceton; Ester wie die Methyl-, Ethyl-, n- oder i-Propylester der Ameisen-, Essig- oder Propionsäure; Amine wie Mono-, Di- und Tri-methyl- bzw.

Ethyl- oder n- oder i-Propylamin oder gemischt alkylierte Amine davon; sowie Gemische von zwei oder mehr dieser Fluide. Von den genannten organischen Verbindungen sind C₁-C₆-Alkanole, -Ether, -Ketone, -Aldehyde, -Alkane, -Alkene,-Ester oder -Amine bevorzugt. Am meisten bevorzugt sind C₁-C₃-Alkanole, insbesondere Isopropanol. Prinzipiell kommen auch halogenierte Kohlenwasserstoffe in Frage, jedoch wird man diese aus Gründen der Werkstoffauswahl sowie Umweltschutzauflagen vermeiden. Auch Medien mit hohen kritischen Temperaturen oder hohen Drücken, wie Wasser, wird man zu umgehen versuchen. Neben den genannten Trocknungsfluiden eignet sich auch überkritisches Kohlendioxid als Trocknungsfluid. Dieses ist insbesondere wegen seiner günstigen kritischen Temperatur von 31 °C besonders für thermisch sensible Substanzen gut geeignet.

Allgemein hängt die Auswahl des Trocknungsfluids von verschiedenen Punkten ab. Möchte man "nah-"kritische Bedingungen einstellen, bestimmt unter anderem die thermische Stabilität der zu trocknenden Teilchen bzw. des Endproduktes die Auswahl des Trocknungsfluids und begrenzt damit auch die kritische Temperatur des Trocknungsfluids. Daneben können eine mögliche Fluidrückgewinnung nach der Trocknung, die toxikologische Unbedenklichkeit, die Mischbarkeit mit dem Fluid in den zu trocknenden Teilchen, Produkteigenschaften und sicherheitstechnische Daten bei der Auswahl des Trocknungsfluids eine Rolle spielen. Es besteht auch die Möglichkeit, dem Trocknungsfluid eine oder mehrere Komponenten zuzusetzen, die eine oder mehrere funktionelle Gruppen enthalten, die an der Oberfläche der zu trocknenden Teilchen umgesetzt, absorbiert oder adsorbiert werden. Damit kann während der Trocknung gleichzeitig eine gleichmäßige Belegung, Beschichtung oder Imprägnierung der zu trocknenden Teilchen erreicht werden. Eine modifizierte Anwendung des Trocknungsfluids ist z.B. die Zugabe von Ammoniak zu Isopropanol als Trocknungsfluid, um z.B. sauce Hydrogele trocknen zu können, ohne daß sich Isopropanol zersetzt. Bei Methanol als Trocknungsfluid bewirkt die Zugabe von Ammoniak, daß sich nicht unerwünscht viel Ether bildet. Beispielsweise kann im Fall des Einsatzes von Methanol als Trocknungsfluid Isopropanol oder Isobutanol zur Hydrophobierung eines Kieselsäure-Gels zugesetzt werden. Allgemein können zum chemischen Modifizieren, z.B. Entfernung von Wasserspuren mit Propen, oder zum physikalischen Modifizieren der zu trocknenden Teilchen geeignete Komponenten vor, bei oder nach Erreichen der kritischen Temperatur des Fluids zugesetzt werden.

Es genügt, wenn das Trocknungsfluid mit dem in den zu trocknenden Teilchen enthaltenen Fluid wenigstens unter den bei der Trocknung vorliegenden Bedingungen mischbar ist. Vorteilhafterweise verwendet man jedoch als Trocknungsfluid das gleiche wie in den mikroporösen Teilchen enthaltene Fluid. Beispiele für erst unter den Bedingungen der Trocknung vollständig mischbare Fluide/Trocknungsfluide sind Gemenge aus Wasser mit höheren Alkoholen oder Aromaten.

Erfindungsgemäß werden die zu trocknenden, das Fluid enthaltenden Teilchen als Wanderbett im Gegenstrom zu dem Trocknungsfluid geführt. Ein geeignetes Verhältnis oder eine geeignete Einstellung der Stoffströme und Strömungsgeschwindigkeiten von Trocknungsfluid und zu trocknenden Teilchen zur Herstellung und Aufrechterhaltung des Wanderbetts kann vom Fachmann im Rahmen fachüblicher Versuche bestimmt werden. Diese Einstellung hängt unter anderem von der Höhe des Wanderbettes, dem inneren Stofftransport und Wärmetransport in den zu trocknenden Teilchen und dem Wirbelpunkt, d.h. von der Dichte und Korngröße bzw. Korngrößenverteilung der mikroporösen, zu trocknenden Teilchen, ab.

Der Trocknungsfluidstrom wird vorzugsweise so eingestellt, daß es im Wanderbett zu keiner Fluidisierung und damit nicht zu einer unerwünschten Entmischung kommt. Die Rückvermischung auf der Trocknungsfluidseite ist am geringsten, wenn man in jeder Höhe oder Zone des Wanderbetts mit Fluidgeschwindigkeiten knapp unterhalb des Lockerungspunktes des Wanderbetts arbeitet. Je nach Kornverteilung und Beschaffenheit (Form, Porosität, etc.) der zu trocknenden Teilchen kann es sinnvoll sein, an geeigneter Stelle im Wanderbett Fluid abzuziehen oder zuzugeben, z.B über Schlitzsiebe. Arbeitet man abwechselnd mit zwei Geschwindigkeiten für das Trocknungsfluid, z.B. bei kleinen Korngrößen der Teilchen oder geringem Teilchen/Fluid-Dichteunterschied, wobei der komplett mit zu trocknenden Teilchen gefüllte Trockner nur portionsweise beschickt und entleert wird, wenn der Trocknungsfluidstrom reduziert wird, so ist in der Wärmeeintragsphase (während der die Schüttung gegen die Trocknerdecke gedrückt wird) darauf zu achten, daß der Druckaufbau durch die höhere Trocknungsfluidströmungsgeschwindigkeit nicht die mechanische Belastbarkeit der zu trocknenden Teilchen übersteigt. Möchte man im Wanderbett nicht den gesamten Dichtegradienten bewältigen, so bietet sich an, daß man z.B. bei Isopropanol bei einer Trocknungsfluiddichte von etwa 300 g/l die zu trocknenden Teilchen aus dem Wanderbett austrägt und den Rest der Energie bzw. die letzte Temperatursteigerung erst in der Verbindungsleitung zur Austragsdruckschleuse aufbringt, z.B. durch Stromtrocknung, oder erst absatzweise in der Austragsdruckschleuse. Als Ein- und Austragsorgan für die mikroporösen Teilchen eignen sich alle Arten von Pumpen, die zum Befördern von körnigem Gut geeignet sind, wobei sich modifizierte Betonpumpen besonders bewährt haben. Beim Abbau des Drucks in einer Austragsdruckschleuse kann durch deren Verschaltung mit einer Eintragsdruckschleuse Energie zurückgewonnen werden.

In einer bevorzugten Ausführungsform der Erfindung wird die Trocknung dergestalt durchgeführt, daß man zuerst die zu trocknenden Teilchen drucklos vorgewärmt über eine Druckschleuse in den Trockenraum einspeist, in dem sie als Wanderbett dem Trocknungsfluid entgegenströmen. Nach Erreichen der nah-kritischen bzw. überkritischen Bedingungen des Trocknungsfluids verlassen die Teilchen dann über eine zweite Druckschleuse den Trocknerraum, wonach sie bei Ablassen des Drucks und Umfahren des Zwei-Phasen-Gebiets "getrocknet" werden. Das Trocknungsfluid wird vorzugsweise im Kreislauf gefahren.

Die Grenzflächenspannung des in den Poren der zu trocknenden Teilchen enthaltenden Fluids kann auch herabgesetzt werden durch Zusatz von oberflächenaktiven Substanzen oder eine vorherige Modifizierung der mikroporösen, Fluid enthaltenden Teilchen durch z.B. Silanisierung, organische Veresterung oder Veretherung oder bei Silikagelen duach Siloxanisierung vicinaler Silan-mono-/di-/triole der inneren und äußeren Oberfläche.

In einer weiteren Ausgestaltung betrifft die Erfindung ein Verfahren zur Herstellung von mikroporösen, räumlich vernetzten Teilchen durch die vorstehend definierten Stufen (a) bis (e).

Die Herstellung von mikroporösen, Porenflüssigkeit enthaltenden Teilchen kann gemäß dem Fachmann bekannten Verfahren kontinuierlich erfolgen.

Ein Waschschritt für die in Stufe (a) erhaltenen Teilchen kann erfolgen, wenn unerwünschte Bestandteile, wie nicht umgesetztes Edukt oder Verunreinigungen des Edukts, entfernt werden sollen. Hierzu werden die Teilchen aus Stufe (a) als Wanderbett einem, vorzugsweise mit Wasser mischbaren, Lösungsmittel entgegengeführt. Ein Entsalzungsschritt (b) der mikroporösen, Porenflüssigkeit bzw. Lösungsmittel enthaltenden Teilchen kann vor, nach oder gleichzeitig mit dem Waschen oder allein (ohne Waschen) vorgesehen werden, wenn die Teilchen unerwünschte Salze enthalten. Wird ein solcher Schritt angewandt, wird er kontinuierlich durchgeführt, indem man die aus Stufe (a) erhaltenen Teilchen bzw. die nach dem Waschen erhaltenen Teilchen als Wanderbett einem Wasserstrom entgegenführt. Die Einstellung des Wanderbetts erfolgt in Schritt (b) unter den Bedingungen, wie sie oben bei der Beschreibung der Trocknung genannt sind, wobei diejenigen Merkmale entfallen, die bei der Trocknung erforderlich sind, um unter den nahkritischen Bedingungen des Trocknungsfluids arbeiten zu können. Es können alle gewünschten Auswaschgrade und Entsalzungsgrade eingestellt werden. Der Waschschritt und/oder Entsalzungsschritt werden durch Temperaturerhöhung beschleunigt, d.h. je höher die Temperatur ist, desto schneller laufen sie ab. Vorzugsweise werden sie bei erhöhter Temperatur durchgeführt, wobei die Obergrenze für die Temperatur durch Zersetzung, Verklumpen, Auflösen im Fluid, etc. der zu waschenden bzw. entsalzenden Teilchen vorgegeben wird.
Beispielsweise kann man einige Silikagele bei etwa 80 °C entsalzen. Zur Verbesserung der Quervermischung kann auch eine Pulsation des Lösungsmittel- bzw. Wasserstroms vorgesehen werden. Weiterhin kann durch Einperlen von Gas, z.B. Luft, die Wanderschicht aufgelockert weiden. Vorzugsweise wind in Stufe (b) Hydrogel nach Alterung entsalzt.

In Stufe (c) wird die in den Teilchen enthaltene Porenflüssigkeit teilweise oder vollständig, insbesondere zu 97 bis 99 %, durch ein Fluid ausgetauscht. Geeignete Fluide sind die vorstehend bei der Beschreibung der mikroporösen, Fluid enthaltenden Teilchen beschriebenen Fluide. Analog zur Entsalzung begünstigen erhöhte Temperaturen den Austausch. Bezüglich der geeigneten Temperatur gilt deshalb das vorstehend unter Stufe (b) Gesagte. Ebenso gilt für die Einstellung des Wanderbetts das oben unter Stufe (b) Gesagte. Ein Austausch der Porenflüssigkeit kann natürlich entfallen, wenn die in Stufe (a) oder (b) erhaltenen Teilchen bereits ein geeignetes Fluid enthalten. Es besteht auch die Möglichkeit, daß in Stufe (c) die Porenflüssigkeit in den Teilchen zuerst durch eine zwar mit der Porenflüssigkeit mischbare Flüssigkeit, jedoch nicht für die Trocknung geeignetem Fluid ausgetauscht wird. In diesem Fall wird die mit der Porenflüssigkeit mischbare Flüssigkeit anschließend durch ein für die Trocknung geeignetes Fluid ausgetauscht. In Stufe (c) besteht bei dem Wanderbett auch die Möglichkeit, in verschiedenen Höhen Stoffströme verschiedener Reinheiten einzuspeisen. Weiterhin ist eine Kombination des Austauschschritts mit einer Abtrennung von Feinteil oder z.B. von anhaftendem Öl aus der Gelierung möglich und kann gegebenenfalls einen separaten Klassierschritt einsparen. Auch kann bei entsprechenden kinetischen Verhältnissen die Zusammenfassung von Waschen und/oder Entsalzung in Stufe (b) und Austausch in Stufe (c) in einem Apparat vorteilhaft sein. Stören in den ausgetauschten Teilchen Spuren der ursprünglichen Porenflüssigkeit, kann man diese z.B. in der untersten Zone des Austausch-Wanderbetts unter speziellen Bedingungen, z.B. durch eine Umsetzung, entfernen. Durch Zugabe geeigneter Komponenten am Fuß des Austausch-Wanderbetts ist dies ebenfalls möglich, zusätzlich ist auch eine Kombination mit einer Imprägnierung der mikroporösen Teilchen möglich.

In Stufe (d) werden die mikroporösen, Fluid enthaltenden Teilchen getrocknet. Die Trocknung wird im Wanderbett im Gegenstrom zum Trocknungsfluid durchgeführt, wie sie vorstehend bei dem erfindungsgemäßen Trocknungsverfahren beschrieben ist.

In Stufe (e) werden die getrockneten Teilchen gegebenenfalls von adsorptiv und/oder absorptiv gebundenen Gasen oder Stoffen getrennt oder befreit. Dieser Schritt wird kontinuierlich im Wanderbett im Gegenstrom durchgeführt, wobei die getrockneten Teilchen, vorzugsweise bei Unterdruck, einem Inertgasstrom entgegengeführt werden. Geeignete Inertgase sind Stickstoff, Kohlendioxid oder Edelgase. Unter Umständen kann auch Luft oder Rauchgas verwendet werden. Bezüglich der Einstellung des Wanderbetts gilt das vorstehend unter Stufe (b) Gesagte analog. Es besteht auch die Möglichkeit, der Inertgasphase eine Komponente zuzufügen, die mit den getrockneten Teilchen reagiert oder ab- oder adsorbiert wird. Der Abtrennungsschritt kann gegebenenfalls durch eine Verdrängungsadsorption mit einem stärker adsorbierenden Stoff verbessert werden. In manchen Fällen kann die Entfernung absorptiv oder adsorptiv gebundener Stoffe/Gase auch allein durch Anlegen eines Vakuums erfolgen.

Der Stufe (e) kann sich ein kontinuierlicher Endkonfektionierungsschritt anschließen, bei dem die mikroporösen, räumlich vernetzten Teilchen in die gewünschte Form gebracht werden, z.B durch Mahlen, Sieben oder Vermischen mit für die Anwendung geeigneten Additiven. Es besteht auch die Möglichkeit, die erhaltenen Teilchen mit einer harten Schale zu versehen, z.B. mittels Sintern, um ihre mechanische Festigkeit zu erhöhen.

Bei den erhaltenen mikroporösen, räumlich vernetzten Teilchen handelt es sich um die gleichen Teilchen, wie sie vorstehend bei dem erfindungsgemäßen Trocknungsverfahren beschrieben worden sind, wobei diese Teilchen gegenüber den vorstehend genannten zusätzlich von unerwünschten Nebenstoffen befreit sind.

Die mittels des erfindungsgemäßen Verfahrens erhältlichen mikroporösen Teilchen können auf vielen technischen Gebieten verwendet werden. Unter anderem eignen sie sich zur Herstellung von transparenten oder opaken thermischen Isolationsmaterialien (unter Umständen als Substitut für Fluor-Chlor-Kohlenwasserstoff-haltige Materialien).
Daneben finden Sie, auch Verwendung als Katalysatoren und Katalysatorträger, Adsorptionsmittel, durch Verkokung von mikroporösen Polymeren erhaltene Kohlenstoff-Aerogele als Elektroden (z.B. mit Elektrolyt getränkt in kapazitiven Energiespeichern), Membranen, Cerenkov-Detektoren, superleichte Schwämme zur Einlagerung/Speicherung bzw. als Gelierungs-/Verdickungs-/Thixotropierungsmittel flüssiger Treibstoffe für die Raumfahrt, als Insektizide, sinterbare Vorprodukte für Keramiken oder hochreine Lichtleiter, piezokeramische Schwinger in Ultraschallsendern, in akustischen Antireflex-Schichten, als Dielektrika, als Träger für Fluoreszenzfarbstoffe, als Mattierungsmittel, als Zuschläge in Schmierstoffen, Gummi und Dichtstoffen, in Kompositwerkstoffen und in Farben und Lacken.

Die Figur zeigt schematisch eine Vorrichtung, die zur Durchführung der Stufen (d) und (e) des erfindungsgemäßen Herstellungsverfahrens geeignet ist. Über Zuleitung 1 wird zu trocknendes Gel, z.B. Alkogel mit Isopropanol als Porenfluid, in eine Kammerschleuse 2 eingetragen. Von dort aus gelangt das Alkogel über Zellenrad 3 in die Trockenvorrichtung 4. In der Trockenvorrichtung 4 wird das zu trocknende Alkogel als Wanderbett im Gegenstrom zu einem Isopropanolstrom geführt. Dieser Isopropanolstrom, der den Trocknungsfluidstrom zum Trocknen/Wärmeemtrag darstellt, wird bei etwa 50 bar mittels einer pumpe 8 in einen Wärmetauscher 9 gefördert und dort auf über 280 °C erhitzt. Über Leitung 10 wird das heiße Isopropanol am Fuß der Trockenvorrichtung 4 über einen Strömungsverteiler (nicht gezeigt) eingespeist. Das Isopropanol verläßt die Trockenvorrichtung 4 am Kopf über Leitung 11 und fließt zurück zum Vorlagebehälter 7. Über ein Entspannungsventil vor dem Wärmetauscher 12 wird der Druck im Fluidkreislauf konstant gehalten, d.h. vom Gel thermisch abgetrenntes Isopropanol wind abgelassen, im Wärmetauscher 12 gekühlt und im Behälter 13 aufgefangen. Nach Erreichen der nah- bis überkritischen Bedingungen des Fluids in dem Gel wird dieses aus der Trockenvorrichtung 4 über Zellenrad 5 und Leitung 6 in eine Schleuse 14 überführt. Dort wird gegebenenfalls eine letzte Temperaturerhöhung vorgenommen, entspannt und evakuiert. Dann wird das Aerogel in eine siloförmige Vorrichtung 15 zur Abtrennung sorbierter Gase und/oder Stoffe abgelassen. Das Aerogel wird in der Vorrichtung 15 als Wanderbett von unten von einem Stickstoffstrom bei Unterdruck angeströmt. Über Leitung 16 wird das von sorbierten Gasen/Stoffen befreite Aerogel entnommen. Der Stickstoffstrom wird über Leitung 17 der Vorrichtung 15 am Fuß zugeführt und über Leitung 18 am Kopf abgeführt.

Die Erfindung zeichnet sich weiterhin durch die folgenden Merkmale aus und bietet die folgenden Vorteile:
- Da mit Teilchen von Granulatgröße anstelle von Pulver wie im Stand der Technik gearbeitet wird, entstehen keine Probleme bei der Handhabung von Staub. Trotzdem kann, wenn dies erwünscht ist, auch Pulver erhalten werden, indem man die erhaltenen Teilchen mahlt. Formkörper sind in einigen Fällen auch durch Sintern von Granulat und Pulver erhältlich.
- Die kontinuierliche Durchführung der Verfahrensschritte ermöglicht eine bessere Qualitätskonstanz gegenüber absatzweise durchgeführten Verfahrensschritten.
- Im Gegensatz zu einem Festbettverfahren können kleinere Behälter benutzt werden, weil keine Totzeiten zum Be- und Entladen vorkommen und ein Herausschieben einer Temperatur-Übergangszone von z.T. erheblicher Länge aus dem Festbett nicht erforderlich ist Damit wird unter Umständen die Menge an brennbaren Flüssigkeiten in einer Fabrik minimiert.
- Es war überraschend, daß beim Entsalzen im Wanderbett im Gegenstrom sehr günstige Bedarfsverhältnisse (d.h. erforderliches Frischwasservolumen, um ein bestimmtes Volumen an entsalztem Hydrogel zu erhalten) erzielt werden konnten. Dies war umso überraschender, als in der Literatur, wie oben erwähnt, der Entsalzungsschritt als sehr aufwendig und langwierig dargestellt wurde, weshalb in US-A-3,672,833 die Hydrolyse niederer Alkylorthosilikate zur Herstellung von Silika-Aerogelen vorgeschlagen wurde.
- Im Entsalzungsschritt in Stufe (b) und Austauschschritt in Stufe (c) können bei der erfindungsgemäßen Wanderbettmethode im Gegenstrom alle gewünschten Entsalzungs- bzw. Austauschgrade eingestellt werden. Würde man diese Schritte in einem Festbett durchführen, würden dort unter anderem axiale Gradienten der zu entfernenden Komponenten auftreten.
- Überraschenderweise wurde gefunden, daß auch bei einer instabilen Dichteschichtung auf der Fluidseite das Wanderbettverfahren problemlos bei Waschen/Entsalzen, Austausch und Trocknung angewandt werden kann, d.h., daß eine Verfahrensweise angewandt werden kann, bei der die mikroporösen Teilchen problemlos ohne Fördereinrichtung von oben nach unten wandern. Zur Aufrechterhaltung der instabilen Dichteschichtung wind der Dichteunterschied auf eine ausreichende Wanderbettlänge verschmiert und eine Mindest-Relativgeschwindigkeit eingestellt. Weiterhin war es hierbei überraschend, daß dann dabei im Vergleich zu einem absatzweise betriebenen Festbettaustausch ein akzeptabler spezifischer Bedarf an Verdrängungskomponente erreicht wird.
- Es war überraschend, daß sich bei dem erfindungsgemäßen Trocknungsverfahren der Dichtegradient zwischen dem unteren und dem oberen Bereich der Trockenvorrichtung stabilisieren läßt, d.h. daß am Fuß ein z.B. 100 g/l dichtes, heißes Trocknungsfluid zugeführt und am Kopf des Wanderbetts ein 780 g/l dichtes, abgekühltes Trocknungsfluid abgezogen werden kann.
- Auch bei der Trocknung wird zur Aufrechterhaltung einer instabilen Dichteschichtung der Dichteunterschied vorzugsweise auf eine ausreichende Wanderbettlänge verschmiert. Eine ausreichende Mindest-Relativgeschwindigkeit bewerkstelligt der direkte Wärmeeintrag. Es war überraschend, daß bei der Trocknung kaum mehr Feinanteil als im absatzweise betriehenen Verfahren erzeugt wurde.
- Daneben ist die kontinuierliche Trocknung im Vergleich zu einem absatzweise betriebenen Verfahren aus den folgenden Gründen vorteilhaft. So ist das druckfeste Volumen des Trockners geringer. Es treten keine Temperatur- und/oder Druck-Wechsel-Beanspruchungen auf. Man hat es mit einem gleichmäßigen Energiebedarf zu tun und benötigt daher kleinere Wärmetauscher und eine kleinere Pumpe. Diese braucht nicht temperaturfest zu sein, wenn der Energieeintrag direkt in Geradeaus-Fahrweise erfolgt. Da die zu trocknenden Teilchen quasi kontinuierlich in den Druckraum eingeschleust werden, können dessen Förderorgane und die Armaturen kleiner dimensioniert werden. Die Trocknung im Wanderbett bewirkt gegebenenfalls gleichzeitig eine Staubabtrennung vom Produkt. Das Trocknungsfluid und die zu trocknenden Teilchen werden vergleichsweise nur kurzzeitig bei der Maximaltemperatur thermisch beansprucht. Die maximal vorhandene Menge an heißem Trocknungsfluid wird so minimiert.
- Der kontinuierliche Schritt zur Entfernung sorbierter Gase/Stoffe ist gegenüber einem entsprechenden absatzweisen Schritt vorteilhaft, weil z.B. weniger Stickstoff benötigt wird und entsprechend gleichbleibend kleinere Gasströme gebraucht werden. Damit können die Fackeln bzw. der Abgaswäscher kleiner ausgelegt werden.

Die Erfindung wird anhand des folgenden Beispiels, das eine bevorzugte Ausführungsform der Erfindung darstellt, zusätzlich näher erläutert.

### Beispiel:

### Stufe (a): Hydrogel-Herstellung

Gemäß DE-A-21 03 243, DE-A-44 05 202 und DE-A-16 67 568 wurden Kieselsäure-Hydrogele hergestellt. Mindestens 95 Vol.-% davon wiesen einen Perlendurchmesser von 2 bis 12 mm auf. Grobgut wurde hierbei mittels einem in Wasser untergetauchten Harfensieb abgetrennt. Als nächstes wurden die Kieselsäure-Hydrogele vor der Entsalzung einer kontinuierlichen Stromklassierung unterzogen.

### Stufe (b): Entsalzung

### Apparatur.

Zwei jeweils 11 m hohe und 800 mm weite Entsalzungs-Wanderbetten waren mit Probenahmestellen in verschiedenen Höhen ausgestattet. Frischwasser wurde am Fuß über Verteiler zugeführt und Salzwasser am Kopf über Schlitzsiebpatronen abgeführt.
Die Zellenradschleuse am Fuß stellte die Feststoffströme ein. Bei niedrigen Strömungsgeschwindigkeiten und bei zu Verklebung neigenden Gelen konnte mit statischen Mischern die Quermischung im Bett verbessert werden.

### Durchführung:

In jedem Entsalzungs-Wanderbett wurde einem von oben nach unten wandernden Strom von ca. 510 l/h klassiertem Hydrogel aus der vorherigen Stufe (ca. 150 der 510 l entfallen davon auf das Lückenvolumen) von unten ein Wasserstrom von ca. 2450 l/h entgegengeschickt. Spätestens nach etwa 30 Stunden hatte sich ein stationärer Zustand im Wanderbett eingestellt. Die Leitfähigkeit der Proben, die an den verschiedenen Stellen entlang des Bettes entnommen wurden, zeigte keine Änderungen mehr. Im Überlauf wurde eine Leitfähigkeit von mehr als 1 Milli-Siemens/cm gemessen. Das Wasser im Lückenvolumen des entsalzten Hydrogels wies eine Leitfähigkeit von 40 Micro-Siemens/cm auf, was einem Natriumgehalt von etwa 1 Gew.-% im Gel entspricht.

### Stufe (c): Wasser-/Alkoholaustausch

### Apparatur:

Der Flüssigkeitsaustauschschritt wurde in einem 11 m hohen und 500 mm weiten Wanderbett durchgeführt, das ähnlich aufgebaut war wie das, das zur Entsalzung eingesetzt wurde. Die Zufuhr des Alkohols erfolgte oberhalb der Zellenradschleuse mittels eines Verteilers. Das Wasser-/Alkoholgemisch konnte über Schlitzsiebe ablaufen. Bei niedrigen Strömungsgeschwindigkeiten und bei zu Verldebung neigenden Gelen konnte mit statischen Mischern die Quervermischung im Bett verbessert werden.

### Durchführung:

Dem entsalzten Hydrogelstrom aus Stufe (b) von ca. 1000 l/h wurde ein Isopropanolstrom von ca. 1400 l/h entgegengeschickt. Spätestens nach 10 Stunden hatte sich ein stationärer Zustand im Wanderbett eingestellt. Die Dichten der Proben aus den verschiedenen Probenahmestellen entlang des Bettes zeigten keine Änderung mehr. Der Restwassergehalt im Gel, das am Fuß des Wanderbettes abgeleitet wurde, lag unter 1 Gew.-%. Das spezifische Isopropanol-Bedarfs-Volumen-Verhältnis betrug also 1,4:1.

### Stufe (d): Trocknung

### Apparatur:

Es wurde eine Apparatur eingesetzt, wie sie schematisch in der Figur dargestellt ist. Hierbei verwendete man als Trockner einen 8 m hohen Druckbehälter mit einem Innendurchmesser von 500 mm. Das Gel wurde über eine (oder zwei) Druckschleuse(n abwechselnd) und ein Zellenrad am Kopf des Trockner-Wanderbetts eingetragen und am Fuß des Trockners über ein oder zwei Entspannungsschleusen (abwechselnd) ausgetragen.

### Durchführung:

Über die Druckschleuse und das Zellenrad wurden am Kopf des Trocknerwanderbetts im Mittel 1000 l/h ca. 60 °C warmes Alkogel bei 50 bar über 100 mm weite Armaturen eingetragen. Ein Isopropanolstrom von bis zu 600 kg/h wurde mit Hilfe einer Pumpe in einem Wärmetauscher mit 100-bar-Dampf auf über 280 °C erhitzt und über einen Strömungsverteiler am Fuß des Wanderbetts eingespeist. Über eine zweite Zellenradschleuse wurde mindestens 250 °C heißes Gel aus dem Trockner pneumatisch mit heißem Fluid abwechselnd in eine (oder eine der beiden) Entspannungsschleuse(n) überführt.

### Stufe (e): Abtrennung sarbierter Gase/Stoffe

### Apparatur:

Es wurde eine Apparatur eingesetzt, wie sie schematisch in der Figur dargestellt ist. Man verwendete ein 3 m³ grolies Silo als Vorrichtung zur Entfernung/Abtrennung der sorbierten Gase/Stoffe.

### Durchführung:

Nachdem die Austragsdruckschleuse des Trockners entspannt und evakuiert worden war, wurde das Aerogel-Granulat in das evakuierte Silo abgelassen. Dort ließ man bei ungefähr 30 mbar Druck einen schwachen Stickstoffstrom durch die Schüttung strömen.
Dieser Stickstoffstrom tauschte die Gasatmosphäre im Silo je Stunde zehn Mal aus. Dadurch wurde der Partialdruck von desorbiertem Alkohol niedrig gehalten, die Desorption beschleunigt und vervollständigt. Die Verweilzeit betrug mehr als 30 Minuten, um auch sorbierte Gase/Stoffe aus den Knudsen-Poren des Aerogels zu entfernen. War es erwünscht oder notwendig, abzukühlen, so wurde das Silo bei Normaldruck betrieben und mit N₂ in einer Kreisfahrweise über einen Wäscher gearbeitet.

### Konfektionierung:

Der kontinuierliche Konfektionierungsschritt erfolgte durch Mahlen und Untermischen von Dotierungsstoffen (Einblasen) in einer Stiftmühle.

Das erhaltene Aerogel-Granulat zeigte eine Korngröße bis 12 mm, wobei nur 2 Vol.-% des Granulats weniger als 2 mm Korngröße besaßen. Die mittlere Wärmeleitfähigkeit λ₁₀ der 2 - 3 mm Fraktion des Granulats war nach DIN 52616 besser als 18 mW/(m.K), für das Pulver betrug sie 16 mW/(m.K). Die Transparenz der 2 - 3 mm Fraktion betrug 60 % bei 1 cm Schichtdicke. Die Schüttdichte nach ISO 3944 betrug 70 bis 130 g/l. Das Aerogel war wasserabweisend und schwamm auf Wasser. Der Headspace (die Gasphase oberhalb der Schüttung) des Aerogels wurde bei 100 °C nicht explosiv und wurde bei 160 °C erst nach einer Stunde explosiv.

## Patentansprüche

1. Verfahren zur Trocknung von mikroporösen, Fluid enthaltenden Teilchen, bei dem man die zu trocknenden, Fluid enthakenden Teilchen als Wanderbett im Gegenstrom zu einem Trocknungsfluid führt, das mit dem in den zu trocknenden Teilchen enthaltenen Fluid wenigstens unter den bei der Trocknung vorliegenden Bedingungen mischbar ist, wobei bei nah- bis überkritischem Druck und Temperatur des Fluids die Grenzflächenspannung des Fluids im Vergleich zu der bei atmosphärischen Druck und Raumtemperatur vorliegenden Grenzflächenspannung des Fluids verringert wird, vorzugsweise auf einen Wert im Bereich 0 bis 1/10, insbesondere 0 bis 1/20, der bei atmosphärischem Druck und Raumtemperatur vorliegenden Grenzflächenspannung.

2. Verfahren nach Anspruch 1, **dadurch gekennzeichnet, daß** man als Fluid enthaltende Teilchen Gele, die Wasser, C₁-C₆-Alkanole oder Gemische davon als Fluid enthalten, trocknet.

3. Verfahren nach Anspruch 1 oder 2, **dadurch gekennzeichnet, daß** man Gele, die Isopropanol als Fluid enthalten, trocknet.

4. Verfahren nach einem der Ansprüche 1 bis 3, **dadurch gekennzeichnet, daß** man Kieselsäure-Gele trocknet.

5. Verfahren nach einem der Ansprüche 1 bis 4, **dadurch gekennzeichnet, daß** man die Grenzflächenspannung verringert, indem man die Temperatur entsprechend erhöht.

6. Verfahren nach einem der Ansprüche 1 bis 5, **dadurch gekennzeichnet, daß** man als Trocknungsfluide C₁-C₆-Alkanole, -Ether, -Ketone, -Aldehyde, -Alkane, -Alkene,-Ester oder -Amine, oder Kohlendioxid verwendet.

7. Verfahren nach einem der Ansprüche 1 bis 6, **dadurch gekennzeichnet, daß** man als Trocknungsfluid das gleiche wie in den mikroporösen Teilchen enthaltene Fluid verwendet.

8. Verfahren zur Herstellung von mikroporösen, räumlich vernetzten Teilchen dusch
(a) Herstellen von mikroporösen, Porenflüssigkeit oder Fluid enthaltenden Teilchen,
(b) gegebenenfalls Waschen und/oder Entsalzen der in Stufe (a) erhaltenen, Porenflüssigkeit enthaltenden Teilchen mittels eines Lösungsmittels und/oder Wasser,
(c) gegebenenfalls teilweises oder vollständiges Austauschen der Porenflüssigkeit oder des Wassers oder des Lösungsmittels in den Teilchen durch ein Fluid ausgewählt aus Alkanolen, Ethern Aldehyden, Ketonen, Estern, Aminen, Ammoniak, Schwefeldioxid, Stickstoffdioxid, Schwefelhexafluorid, Alkanen, Alkenen und Gemischen von zwei oder mehreren davon, und Kohlendioxid unter Erhalt von mikroporösen, Fluid enthaltenden Teilchen,
(d) Trocknen der mikroporösen, Fluid enthaltenden Teilchen und
(e) gegebenenfalls Abtrennen sorbierter Gase und/oder Stoffe von den getrockneten Teilchen aus Stufe (d),
**dadurch gekennzeichnet, daß** man die Stufen (b), (c), (d) und (e) im Wanderbett im Gegenstrom durchführt, indem man in Stufe (b) die aus Stufe (a) erhaltenen Teilchen einem Lösungsmittelstrom und/oder Wasserstrom entgegenführt, in Stufe (c) die Teilchen im Gegenstrom zu dem Fluid führt, in Stufe (d) die zu trocknenden, Fluid enthaltenden Teilchen im Gegenstrom zu einem Trocknungsfluid führt, das mit dem in den zu trocknenden Teilchen enthaltenen Fluid wenigstens unter den bei der Trocknung vorliegenden Bedingungen mischbar ist, wobei bei nahbis überkritischem Druck und Temperatur des Fluids die Grenzflächenspannung des Fluids auf 0 bis 1/20 der bei atmosphärischen Druck und Raumtemperatur vorliegenden Grenzflächenspannung des Fluids verringert wird und in Stufe (e) die getrockneten Teilchen einem Inertgasstrom entgegenführt.

9. Verfahren nach Anspruch 8, **dadurch gekennzeichnet, daß** man die Trocknung in Stufe (d) durchführt wie in einem der Ansprüche 2 bis 7 definiert.

10. Verfahren nach Anspruch 8 oder 9, **dadurch gekennzeichnet, daß** man in Stufe (c) die Porenflüssigkeit oder das Wasser oder das Lösungsmittel in den Teilchen zuerst durch eine mit der Porenflüssigkeit oder dem Wasser oder dem Lösungsmittel mischbare Flüssigkeit austauscht und anschließend diese Flüssigkeit durch das Fluid austauscht.

## Claims

1. A process for drying microporous, fluid-containing particles, in which the fluid-containing particles to be dried are fed as a moving bed countercurrently to a drying fluid which is miscible with the fluid contained in the particles to be dried at least under the conditions existing during drying, the interfacial tension of the fluid being reduced in comparison with the interfacial tension of the fluid at atmospheric pressure and room temperature, at near-critical to supercritical pressure and temperature of the fluid, preferably to a value in the range from 0 to 1/10, in particular from 0 to 1/20, of the interfacial tension at atmospheric pressure and room temperature.

2. A process as claimed in claim 1, wherein the fluid-containing particles dried are gels which contain water, C₁-C₆-alkanols or mixtures thereof as fluid.

3. A process as claimed in claim 1 or 2, wherein gels which contain isopropanol as fluid are dried.

4. A process as claimed in any of claims 1 to 3, wherein silica gels are dried.

5. A process as claimed in any of claims 1 to 4, wherein the interfacial tension is reduced by correspondingly increasing the temperature.

6. A process as claimed in any of claims 1 to 5, wherein the drying fluids used are C₁-C₆-alkanols, C₁-C₆-ethers, C₁-C₆-ketones, C₁-C₆-aldehydes, C₁-C₆-alkanes, C₁-C₆-alkenes, C₁-C₆-esters or C₁-C₆-amines or carbon dioxide.

7. A process as claimed in any of claims 1 to 6, wherein the drying fluid used is the same as the fluid contained in the microporous particles.

8. A process for the preparation of microporous, three-dimensionally networked particles by
(a) preparation of microporous particles containing pore liquid or fluid,
(b) if required, washing off and/or removal of salt from the particles obtained in stage (a) and containing pore liquid, by means of a solvent and/or water,
(c) if required, partial or complete exchange of the pore liquid or of the water or of the solvent in the particles for a fluid selected from alkanols, ethers, aldehydes, ketones, esters, amines, ammonia, sulfur dioxide, nitrogen dioxide, sulfur hexafluoride, alkanes, alkenes, and mixtures of two or more thereof, and carbon dioxide, to obtain microporous, fluid-containing particles,
(d) drying of the microporous, fluid-containing particles and
(e) if required, separation of sorbed gases and/or substances from the dried particles from stage (d),
wherein stages (b), (c), (d) and (e) are carried out in a moving bed by the countercurrent method, by passing the particles obtained from stage (a) countercurrently to a solvent stream and/or water stream in stage (b), passing the particles countercurrently to the fluid in stage (c), passing the fluid-containing particles to be dried countercurrently to a drying fluid which is miscible with the fluid contained in the particles to be dried at least under the conditions existing during drying in stage (d), the interfacial tension of the fluid being reduced, at near-critical to supercritical pressure and temperature of the fluid, to 0 to 1/20 of the interfacial tension of the fluid at atmospheric pressure and room temperature, and the dried particles being passed countercurrently to an inert gas stream in stage (e).

9. A process as claimed in claim 8, wherein the drying in stage (d) is carried out as defined in any of Claims 2 to 7.

10. A process as claimed in claim 8 or 9, wherein, in stage (c), the pore liquid or the water or the solvent in the particles is first exchanged for a liquid miscible with the pore liquid or with the water or with the solvent and this liquid is then exchanged for the fluid.

## Revendications

1. Procédé pour le séchage de particules microporeuses contenant un fluide, dans lequel on place les particules contenant le fluide sous forme de lit migrant à contre-courant par rapport à un fluide de séchage qui est miscible avec le fluide contenu dans les particules à sécher au moins dans les conditions de séchage, la tension interfaciale du fluide étant réduite, aux pression et température sub-critiques ou sur-critiques du fluide, par rapport à la tension interfaciale du fluide à la pression atmosphérique et la température ambiante, de préférence à une valeur située sur la plage de 0 à 1/10, en particulier de 0 à 1/20, de la tension interfaciale à la pression atmosphérique et la température ambiante.

2. Procédé selon la revendication 1, **caractérisé en ce que** l'on sèche en guise de particules contenant un fluide des gels qui contiennent de l'eau, des alcanols C₁-C₆ ou des mélanges de ceux-ci en guise de fluide.

3. Procédé selon la revendication 1 ou 2, **caractérisé en ce que** l'on sèche des gels qui contiennent de l'isopropanol en guise de fluide.

4. Procédé selon une des revendications 1 à 3, **caractérisé en ce que** l'on sèche des gels de silice.

5. Procédé selon une des revendications 1 à 4, **caractérisé en ce que** l'on réduit la tension interfaciale en augmentant la température en conséquence.

6. Procédé selon une des revendications 1 à 5, **caractérisé en ce que** l'on utilise comme fluides de séchage des alcanols, des éthers, des cétones, des akhédydes, des alcanes, des alcènes, des esters ou des amines C₁-C₆, ou du dioxyde de carbone.

7. Procédé selon une des revendications 1 à 6, **caractérisé en ce que** l'on utilise en guise de fluide de séchage le même fluide que celui contenu dans les particules microporeuses.

8. Procédé pour la fabrication de particules microporeuses réticulées dans l'espace par
(a) fabrication de particules microporeuses contenant un liquide interstitiel ou un fluide,
(b) le cas échéant, lavage et/ou dessalement des particules contenant un liquide interstitiel obtenues à l'étape (a) au moyen d'un solvant et/ou d'eau,
(c) le cas échéant, remplacement partiel ou intégral du liquide interstitiel, de l'eau ou du solvant dans les particules par un fluide choisi parmi des alcanols, des éthers, des akhédydes, des cétones, des esters, des amines, de l'ammoniac, du dioxyde de soufre, du dioxyde d'azote, de l'hexafluorure de soufre, des alcanes, des alcènes et des mélanges de deux ou plus de ces produits, et du dioxyde de carbone, en conservant les particules microporeuses contenant le fluide,
(d) séchage des particules microporeuses contenant le fluide et
(e) le cas échéant, séparation des gaz et/ou matières absorbés par les particules séchées à l'étape (d),
**caractérisé en ce que** l'on réalise les étapes (b), (c), (d) et (e) dans un lit migrant à contre-courant, en soumettant à l'étape (b) les particules obtenues à l'étape (a) à un courant de solvant et/ou un courant d'eau, en plaçant à l'étape (c) les particules à contre-courant par rapport au fluide, en plaçant à l'étape (d) les particules contenant le fluide à contre-courant par rapport à un fluide de séchage qui est miscible avec le fluide contenu dans les particules à sécher au moins dans les conditions de séchage, la tension interfaciale du fluide étant réduite, aux pression et température sub-critiques ou sur-critiques du fluide, à entre 0 et 1/20 de la tension interfaciale à la pression atmosphérique et la température ambiante, et en soumettant à l'étape (e) les particules séchées à un courant de gaz inerte.

9. Procédé selon la revendication 8, **caractérisé en ce que** l'on réalise le séchage à l'étape (d) comme il est défini dans une des revendications 2 à 7.

10. Procédé selon la revendication 8 ou 9, **caractérisé en ce qu'**à l'étape (c) on remplace d'abord le liquide interstitiel, l'eau ou le solvant dans les particules par un liquide miscible avec le liquide interstitiel, l'eau ou le solvant, puis on remplace ce liquide par le fluide.
